# EUROPÄISCHE PATENTSCHRIFT

(11) **EP 3 775 439 B1**
(45) Veröffentlichungstag und Bekanntmachung des Hinweises auf die Patenterteilung: **07.06.2023**
(21) Anmeldenummer: 19717238.0
(22) Anmeldetag: 31.03.2019
(51) Int. Cl.: E04H 15/06, B60P 3/38

(54) **FALTPLATTFORM FÜR FAHRZEUGE**
FOLDING PLATFORM FOR VEHICLES
PLATE-FORME PLIANTE POUR DES VÉHICULES

(30) Priorität: 31.03.2018 DE 102018107728
(43) Veröffentlichungstag der Anmeldung: 17.02.2021
(73) Patentinhaber: Technische Innovationsentwicklung Martin Roemheld E.K., 38162 Cremlingen (DE)
(72) Erfinder: ROEMHELD, Martin, 38162 Cremlingen (DE)
(74) Vertreter: Schreiter, Christoph
(86) Internationale Anmeldenummer: PCT/EP2019/058122
(87) Internationale Veröffentlichungsnummer: WO 2019/185943

(56) Entgegenhaltungen:
- WO-A1-2009/097010
- US-A- 2 640 999
- US-A- 2 642 587
- US-A- 4 333 679

## Beschreibung

Die vorliegende Beschreibung bezieht sich auf Plattformen und Zelte zum Transport auf einem Fahrzeugdach.

Zelte werden in vielfältiger Form verwendet. Für den Transport auf Kraftfahrzeugen sind Dachzelte verfügbar, welche auf einem Dachträger fest an dem Fahrzeugdach montiert werden. Meist sind diese Dachzelte faltbar und können aus einer zusammengeklappten Transportkonfiguration in eine geöffnete Konfiguration ausgeklappt werden, wozu verschiedene Mechanismen verwendet werden. Die Dachzelte sind dabei fest an einem Dachträger oder einer anderen Trägerkonstruktion mit der Karosserie des Fahrzeugs verbunden. Das Fahrzeug kann bei aufgebautem Zelt nicht verwendet werden.

Beispiele für solche, fest mit dem Dachträger verbundene Dachzelte sind aus der GB 989 081 A und aus der DE 29 00 849 A1 bekannt.

Die US 3,278,953 offenbart ein faltbares Dachzelt für Fahrzeuge mit kleineren Dächern, bei welchem klappbare Beine zur Abstützung vorgesehen sind.

Als Variante ist aus der US 2,642,587 eine Zeltkonstruktion bekannt, die am Heck des Fahrzeugs angeschlagen ist und hinter das Fahrzeug geklappt werden kann.

Aus der WO 2009 097010 A1 sind größere Dachzelte bekannt, welche sich direkt am Fahrzeugdach abstützten und fest mit diesem verbunden sind.

Die US 2,640,999 beschreibt einen Dachcontainer, der auf Stützstangen gestützt werden kann und direkt auf einem Fahrzeugdach transportiert werden kann, was unvermeidlich zu Kratzern auf dem Fahrzeugdach führen muss.

Aus der US 4,333,679 ist ein Zeltmechanismus bekannt, welcher von einem Dachträger angehoben werden kann um mit dem Zeltboden ein auf dem Boden stehendes Zelt zu bilden.

### Zusammenfassung der Erfindung

Die vorliegende Beschreibung schlägt eine Plattform zur Anordnung an einem Fahrzeug vor.

In einem Aspekt umfasst die Erfindung eine Plattform nach Anspruch 1.

Die Beschreibung bezieht sich auch auf ein Verfahren zum Aufbau einer auf einem Träger gelagerten Plattform. Das Verfahren umfasst ein Entfalten eines ersten Bodenabschnitts bezüglich eines zweiten Bodenabschnitts, welche in einer Aufnahme des Dachträgers gelagert sind. Dann erfolgt ein Arretieren des ersten Bodenabschnitts mit dem zweiten Bodenabschnitt zu einer verriegelten oder verspannten Bodenplatte, wobei die verriegelte Bodenplatte auf einem bezüglich der Aufnahme erhöhtem Widerlager des Dachträgers aufliegt. Dann erfolgt ein Anheben der Bodenplatte über das erhöhte Widerlager und ein Abstützen der verriegelten Bodenplatte auf Beinen.

Die Beschreibung bezieht sich auch auf ein Verfahren zum Abbau einer Plattform. Das Verfahren umfasst ein Entriegeln oder entspannen einer verriegelten oder verspannten Bodenplatte, so dass ein erster Bodenabschnitt bezüglich eines zweiten Bodenabschnitts verschwenkt und zumindest eines des ersten Bodenabschnitts und des zweiten Bodenabschnitts auf einer Aufnahme aufliegt. Das Verfahren umfasst weiter ein Zusammenklappen des ersten Bodenabschnitts auf den zweiten Bodenabschnitt und verschieben der zusammen geklappten Bodenabschnitte auf dem Dachträger bis die zusammen geklappten Bodenabschnitte in der Aufnahme aufgenommen sind.

Weitere Ausführungsformen, welche vorteilhafte Aspekte zeigen, sind in den abhängigen Ansprüchen aufgeführt.

### Figurenbeschreibung

Die Erfindung wird deutlicher beim Lesen der folgenden Beschreibung, welche unter Bezugnahme der Figuren erfolgt, welche zeigen:
Figur 1 ein Beispiel einer aufgebauten Plattform am Beispiels eine Zeltes;
Figur 2 ein Beispiel wie der Raum unter der Plattform mit dem Zelt genutzt werden kann;
Figur 3 ein Beispiel, wie eine Plattform aufgebaut werden kann; und
Figur 4 ein Beispiel wie die Plattform abgebaut und in einer Aufnahme platziert werden kann.

### Detaillierte Beschreibung

In der folgenden detaillierten Beschreibung werden Beispiele angegeben, die Aspekte und Implementierungen der Erfindung lediglich beispielhaft darstellen und die nicht einschränkend sind. Es ist zur Umsetzung der Erfindung nicht erforderlich alle mit Bezug zu einem oder mehreren Beispielen dargestellte Merkmale einzusetzen. Vielmehr wird ein Fachmann erkennen, dass verschiedene Merkmale weggelassen oder durch andere ersetzt werden können ohne von der Erfindung abzuweichen.

In der Beschreibung verwendet Angaben zur Position wie "oberhalb", "erhöht", "über" "unterhalb", "unter", "seitlich" oder "neben" beiziehen sich auf die vorgesehene und beschriebene Handhabung auf einem ebenen Untergrund.

Die Beschreibung bezieht sich auf eine zusammenklappbare Plattform zum Transport auf einem Träger. Der Träger kann ein Transportträger für ein Fahrzeug sein, beispielsweise ein Dachträger zur Anordnung auf einem Fahrzeugdach. Das Fahrzeug kann normaler PKW, ein Geländewagen, ein Pick-up, ein Lastwagen, aber auch ein Anhänger sein. Der Träger muss nicht notwendigerweise auf dem Dach des Fahrzeugs angeordnet sein, sondern kann auch an einer anderen Stelle des Fahrzeugs angeordnet sein, beispielsweise über einer Ladefläche eines Lastwagens, eines Pick-ups oder eines Anhängers.

Die Plattform umfasst ein Tragwerk bestehend aus einer Bodenplatte und mehreren Beinen.

Die Bodenplatte umfasst einen ersten Bodenabschnitt und einen zweiten Bodenabschnitt, welche zueinander beweglich sind. Beispielsweise können der erste Bodenabschnitt und der zweite Bodenabschnitt jeweils an einer Längsseite mit einem oder mehreren Scharnieren oder mit einem anderen Schwenkmechanismus verbunden sein und so zueinander schwenkbar bzw. klappbar sein. Damit können der erste Bodenabschnitt und der zweite Bodenabschnitt aufeinander geklappt werden. In dieser Transportkonfiguration, kann die Bodenplatte platzsparend transportiert werden.

Neben dem oben beschriebenen Klappmechanismus, mit welchem der erste Bodenabschnitt bezüglich des zweiten Bodenabschnitts klappbar ist, kann auch ein anderer Mechanismus verwendet werden. Beispielsweise können der erste Bodenabschnitt und der zweite Bodenabschnitt zueinander verschiebbar sein.

Neben dem ersten Bodenabschnitt und dem zweiten Bodenabschnitt können weitere Bodenabschnitte oder weitere Bodenelemente vorgesehen sein. Eine Vielzahl von Bodenabschnitten kann aufgerollt werden oder mehrfach gefaltet werden.

Der erste Bodenabschnitt und der zweite Bodenabschnitt können entsprechend auch aufgeklappt werden. Im aufgeklappten oder entfalteten Zustand sind der erste Bodenabschnitt und der zweite Bodenabschnitt im Wesentlichen in einer Ebene angeordnet und bilden zusammen die Bodenplatte der Plattform. Dazu werden der erste Bodenabschnitt und der zweite Bodenabschnitt mit einer Verriegelung zueinander fixiert. Die Verriegelung kann einen oder mehrere Riegel umfassen. Die Riegel können starre Elemente, wie Stangen, oder Profile sein, welchen an den Bodenabschnitten befestigt werden. Die Verriegelung kann auch eine Arretierung des Scharnies umfassen. Die Verriegelung kann auch einem Spannmechanismus umfassen. Mit dem Spannmechanismus kann den ersten Bodenabschnitt zu dem zweiten Bodenabschnitt verspannt werden um eine stabile Bodenplatte zu bilden. Der Spannmechanismus kann über verschiedene Bauelemente, wie beispielsweise Seile Gurte, Anlenkungen, Spannhebel und ausgebildet werden.

Im auseinander geklappten Zustand bildet die Bodenplatte eine Plattform, die verschiedenartige genutzt werden kann. Beispielswiese kann die Plattform als Bühne oder als Gerüst verwendet werden. An der Plattform könne Geländer oder eine Reling angeordnet werden oder die Plattform kann die Basis für weitere Aufbauten sein. In einer weiteren Ausführung kann die Plattform ein Zelt aufweisen. In diesem Beispiel kann die Bodenplatte der Boden eines Zeltes sein und beispielsweise zumindest teilweise eine Liegefläche für das Zelt bilden. Eine Zeltkonstruktion kann so an dem ersten Bodenabschnitt und dem zweiten Bodenabschnitt angeordnet sein, dass sich das Zelt beim Aufklappen der Bodenabschnitte selbst entfaltet. Das Zelt kann dazu Gestängeelemente aufweisen. Ähnliche geeignete Konstruktionen sind von verfügbaren Dachzelten bekannt und können hier in ähnlicher Weise verwendet werden.

Der erste Bodenabschnitt und/oder der zweite Bodenabschnitt können eine Platte oder mehrere Plattenelemente umfassen, beispielsweise aus Holz, einem Metall oder einem Kunststoffmaterial. Die Platten können selbstragend sein. Es ist jedoch auch möglich, dass der erste Bodenabschnitt und der zweite Bodenabschnitt einen Rahmen aus einem Rahmen gebildet sind. Der erste Bodenabschnitt und der zweite Bodenabschnitt können auch einen Rahmen umfassen, auf welchem dann eine oder mehrere Plattenelemente angeordnet werden können, die von dem Rahmen getragen werden. Dadurch werden die Bodenabschnitte und damit die Bodenplatte steifer gegenüber Verwindungen und Durchbiegung.

Die Bodenabschnitte können eine oder mehrere Öffnungen aufweisen, beispielsweise um einen Durchstieg auf die Plattform zu ermöglichen. Der Druchstieg kann mittels einer Leiter erfolgen oder es kann eine Öffnung in dem Fahrzeug vorgsehen sein, so dass man direkt aus dem Fahrzeug, sofern dieses unter der Plattform steht, auf die Plattformsteigen kann. Diese Öffnungen können verschließbar sein, beispielsweise mittels klappbarer, verschiebbarer oder entnehmbarer Bodenelemente.

An der Bodenplatte können mehrere Beine oder Stützen angeordnet sein. Die Beine stützen die Plattform im aufgestellten Zustand am Boden ab. Die Beine können dazu in der Länge verstellbar sein. Die Beine können klappbar an dem ersten und/oder zweiten Bodenabschnitt befestige sein oder können reversibel an diesen befestigbar sein. Die Beine können zum Transport abnehmbar sein. Die Beine können auf teleskopierbar oder anders in der Länge verstellbar sein. Damit können beim Aufstellen Bodenunebenheiten ausgeglichen werden und gleichzeitig kompakte Transportmaße erreicht werden. Die Beine sind jedoch auch lang genug, um die Plattform anzuheben und das Ausfahren und Einfahren des Transportfahrzeuges unter der aufgebauten Plattform zu ermöglichen.

In aufgestellten Zustand wird die Plattform lediglich von den Beinen getragen. Die Plattform ist gegenüber der Transportposition angehoben und freistehend. Eine Verbindung zu dem Autodach oder dem Träger ist nicht erforderlich und das Fahrzeug kann unter der Plattform entfernt werden. Der darunter freiwerdenden Raum kann für andere Dinge genutzt werden und beispielsweise durch eine Zeltwand abgeschlossen werden.

Eines, mehrere oder alle Beine 24 können eine Längenverstellung, beispielsweise einen Teleskopmechanismus, Verstellschrauben zur Höheneinstellung oder anderes umfassen. Damit können Unebenheiten im Geländer ausgeglichen werden. Mit einer Höheneinstellung ist es auch möglich, die Plattform an unterschiedliche Fahrzeuge oder Trägerhöhen anzupassen.

Zur Erhöhung der Stabilität können Abspannvorrichtungen vorgesehen sein. Die Abspannvorrichtungen können zwischen den Beinen oder zwischen Beinen und der Bodenplatte angeordnet und im aufgestellten Zustand auf Zug belastet sein. Die Abspannvorrichtungen können Gurte und/oder Seile umfassen. Zum Spannen können Spannvorrichtungen vorgesehen sein.

Zum Transport kann die Plattform auf dem Träger zusammengefaltet und abgelegt werden. Der Träger kann auch als Dachträger oder Transportträger bezeichnet werden. Der Träger umfasst dazu eine Aufnahme. Die Aufnahme kann korbförmig ausgebildet sein oder zumindest seitliche Führungen und Anschläge aufweisen, welche eine Aufnahme für die ersten Bodenplatte und oder die zweite Bodenplatte bilden. In zusammengeklapptem Zustand liegt die erste Bodenplatte oder die zweite Bodenplatte in der Aufnahme und ist dort gegen ein Verrutschen oder ein Abheben gesichert.

Die Beschreibung bezieht sich auch auf ein Verfahren zum Aufbau einer auf einem Träger gelagerten Plattform. Das Verfahren umfasst ein Entfalten eines ersten Bodenabschnitts bezüglich eines zweiten Bodenabschnitts, welche in einer Aufnahme des Dachträgers gelagert sind. Sind der erste Bodenabschnitt und der zweite Bodenabschnitt über ein Scharnier verbunden, kann das Entfalten ein Aufklappen sein. Die Bodenabschnitte werden entfaltet bzw. aufgeklappt bis der erste Bodenabschnitt und der zweite Bodenabschnitt im Wesentlichen in einer Ebene liegen und eine Bodenplatte bilden.

Dann erfolgt ein Arretieren oder Verriegeln des ersten Bodenabschnitts mit dem zweiten Bodenabschnitt zu einer verriegelten Bodenplatte, wobei die verriegelte Bodenplatte auf einem bezüglich der Aufnahme erhöhtem Widerlager des Dachträgers aufliegt. Bereits jetzt oder später können Beine an einer der Bodenabschnitte angeordnet werden. Die Beine können fest oder drehbar oder anderweitig beweglich an dem jeweiligen Bodenabschnitt befestigt werden. Insbesondere können Beine zunächst an dem ersten Bodenabschnitt angeordnet werden und diese Seite am Untergrund abstützten.

Die Bodenabschnitte können über das erhöhte Widerlager und ein Abstützen der verriegelten Bodenplatte auf Beinen angehoben und von dem Träger abgehoben werden. Dazu können weitere Beine als Hebel verwendet werden und die Plattform über das Wiederlager hochgehebelt werden. Die Beine können dann zum Abstützen auch der zweiten Abschnitte verwendet werden.

Die Beschreibung bezieht sich auch auf ein Verfahren zum Abbau einer Plattform. Das Verfahren umfasst ein Entriegeln einer verriegelten Bodenplatte, so dass ein erster Bodenabschnitt bezüglich eines zweiten Bodenabschnitts verschwenkt und zumindest eines des ersten Bodenabschnitts und des zweiten Bodenabschnitts auf einer Aufnahme aufliegt. Das Entriegeln kann das Entfernen des Riegels umfassen. Das Entriegeln kann auch das Entspannen einer Spannvorrichtung umfassen. In diesem Fall kann die Spannvorrichtung kontrolliert und/oder gebremst gelöst werden, um ein kontrolliertes Absenken der Bodenabschnitte auf die Aufnahme zu ermöglichen. Das Verfahren umfasst weiter ein Zusammenklappen des ersten Bodenabschnitts auf den zweiten Bodenabschnitt und verschieben der zusammen geklappten Bodenabschnitte auf dem Dachträger bis die zusammen geklappten Bodenabschnitte in der Aufnahme aufgenommen sind.

Wurde das Fahrzeug mit dem Träger zwischenzeitlich entfernt, kann das Fahrzeug vor dem Abbau wieder unter den Bodenabschnitten positioniert werden. Es ist dabei nicht erforderlich, dass der Träger in eine bestimmte Position gebracht wird. Eine grobe Positionierung ist ausreichend und langwieriges Rangieren kann entfallen. Die zusammen geklappten Bodenabschnitte können in die vorgesehene Position in der Aufnahme verschoben werden. Die Aufnahme kann dazu Führungen aufweisen, welche die Bodenabschnitte in die vorgesehen Position leiten.

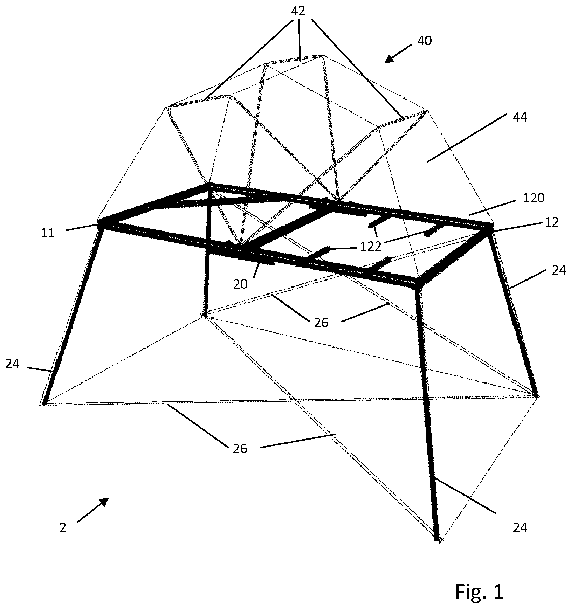

Im Folgenden werden Beispiele der Erfindung anhand der beiliegenden Figuren beschrieben. Die Figur 1 zeigt ein Beispiel eines Dachzelts, als ein Beispiel einer Plattform 2 im aufgebauten Zustand. Die Plattform bzw. das Dachzelt 2 ist im aufgebauten Zustand selbststehend und benötigt das Transportfahrzeug nicht. Eine erster Bodenabschnitt 11 bildet mit dem zweiten Bodenabschnitt 12 mittels einer Verriegelung 20 eine starre Bodenplatte. Die Bodenplatte ist hier als eine Rahmenkonstruktion, beispielweise aus Aluminiumprofilen gezeigt. Der erste Bodenabschnitt 11 umfasst einen ersten Rahmen 110, der mit einer oder mehreren Diagonalstreben 112 versteift sein kann. Auf dem ersten Rahmen 110 und der Diagonalstreben kann eine Bodenplatte, beispielsweise aus Holz, MDF oder einem anderen leichtgewichtigen stabilen Material angeordnet sein. In der Bodenplatte kann eine Öffnung vorgesehen sein, die eine Durchreiche und/oder einen Zustieg auf die Plattform bzw. in das Zelt, beispielswiese über eine Leiter (nicht gezeigt), ermöglicht. Der zweite Bodenabschnitt umfasst einen zweiten Rahmen 120, an dem eine Vielzahl von Querstreben 122 angeordnet sein können. Diese Querstreben 122 können als Träger für einen Boden oder als Träger für einen Lattenrost oder ähnliches verwendet werden. Die Querstreben 122 können auch etwas tiefer als der erste Rahmen angeordnet sein und können beim Transport oder beim Lagern als Auflager für einen Träger dienen.

Die Rahmenkonstruktion wird von in diesem Beispiel vier Beinen 24, welche an den Ecken der Plattform angeordnet sind, getragen. Die Beine sind über ein Gurtwerk aus einer Vielzahl von Abspannungen verbunden, was das Tragwerk und die gesamte Plattform versteift und stabilisiert.

Auf der Bodenplatte ist eine Zeltkonstruktion 40 angeordnet, bei welcher das Zeltdach 44 sich mittels eines Zeltgestänges 42 über der Bodenplatte aufspannt. Ähnliche Zeltkonstruktionen sind von herkömmlichen Dachzelten bekannt und können für die hier verwendete selbsttragende Plattform verwendet oder leicht angepasst werden.

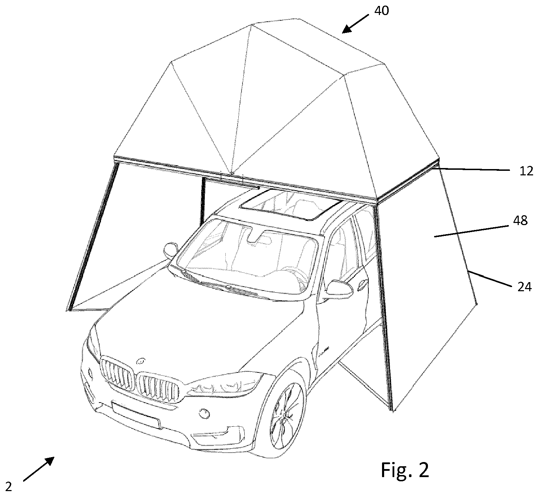

Figur 2 zeigt die in Figur 1 schematisch dargestellte Plattform als geschlossenes Zelt. Zusätzlich können zwischen den Beinen und unterhalb der Bodenplatte Zeltwände 48 angebracht werden um den Raum unter der Bodenplatte zu begrenzen und zu schützen. Wie dargestellt, kann der Raum unter der Bodenplatte genutzt werden. Das zum Auf- bzw. Abbau genutzte Fahrzeug kann unter der Bodenplatte verbleiben und dort geschützt stehen. Alternativ kann der untere Raum auch für andere Zwecke, beispielsweise als Lagerraum für Sportgeräte, als mobile Werkstatt, als Campingküche genutzt werden. Viele andere Nutzungsmöglichkeiten sind denkbar.

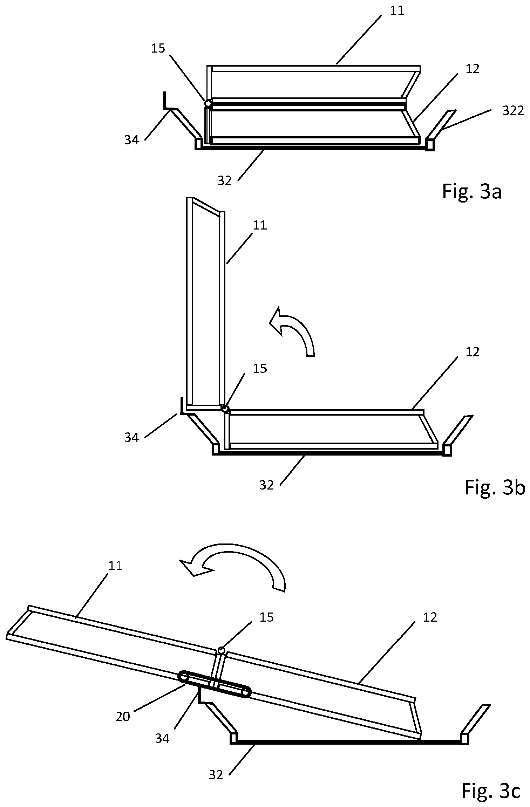

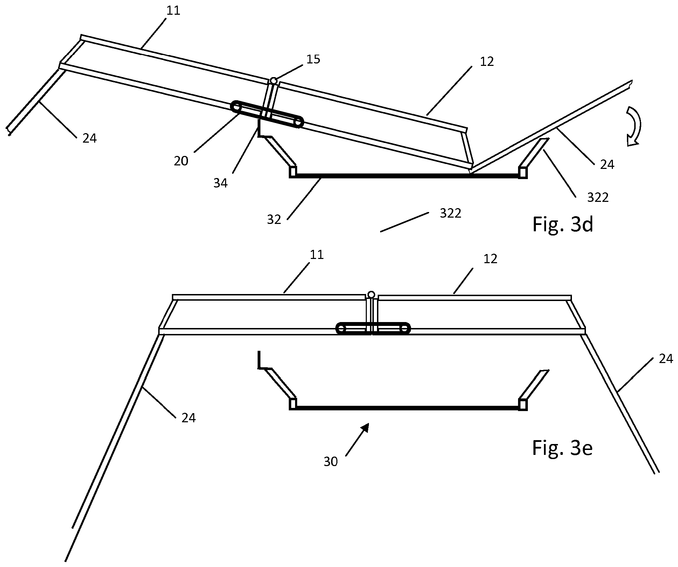

Figur 3 zeigt schematisch, wie eine Plattform aufgebaut werden kann. Fig. 3a zeigt die Plattform im Transportzustand. In dem Transportzustand lagern der ersten Bodenabschnitt 11 und der zweite Bodenabschnitt 12 in einer Aufnahme 32 eines Trägers 30. Der Träger 30 kann eine Dachträgerkonstruktion sein, die auf einem Fahrzeugdach, einem Grundträger oder an einer Dachreling montiert werden kann. Zur Vereinfachung ist hier das Fahrzeug nicht gezeigt.

Die Aufnahme 32 hat eine Wannen- oder Korbform, welche in der Größe dem zweiten Bodenabschnitt 12 entspricht, so dass die Bodenabschnitte nicht verrutschen können. Die Aufnahme weist eine oder mehrere Führungen 322 auf, welche den Auflagebereich seitlich begrenzen. Neben der Aufnahme 32 oder an einer der Führungen 322 ist eine Auf- bzw. Widerlager 34 angeordnet.

Daneben können Befestigungen vorgesehen sein, die die Bodenabschnitte während dem Transport in der Aufnahme sichern. Eine Verriegelung 20 kann verwendet werden um den ersten Bodenabschnitt 11 an dem zweiten Bodenabschnitt 12 zu arretieren und ein ungewolltes Aufklappen während der Fahrt zu verhindern.

Der erste Bodenabschnitt 11 und der zweite Bodenabschnitt 12 sind über ein Scharnier 15 miteinander verbunden, so dass der oben gelegen Bodenabschnitt 12 nach lösen der Verriegelung 29 und andere Befestigungen noch oben aufgeklappt werden kann, wie in Fig. 3b dargestellt. Hier kommt der erste Bodenabschnitt 11 bereits in Kontakt mit dem Widerlager 34.

Wird der erste Bodenabschnitt 11 nun bezüglich des zweiten Bodenabschnitts 12 weiter aufgeklappt, stützt sich der erste Bodenabschnitt an dem Widerlager 34 ab und hebelt den zweiten Bodenabschnitt 12 nach oben, bis der erste Bodenabschnitt 11 und der zweite Bodenabschnitt 12 in einer Ebene liegen, wie in Fig. 3c gezeigt ist. Es kann ein Anschlag vorgesehen sein um ein weiteres Schwenken der ersten Bodenplatte 11 zu verhindern. Die Verriegelung 20 wir dann zwischen erstem Bodenabschnitt 11 und zweiten Bodenabschnitt 12 so angeordnet, dass beide Bodenabschnitte zusammen eine starre und im Wesentlichen in einer Ebene angeordnete Bodenplatte bilden. Wie in Figur 3c gezeigt, liegt die Bodenplatte noch auf dem Widerlager 34 auf.

Umfasst die Plattform ein Zelt, wird beim Aufklappen gleichzeitig das zwischen den Bodenabschnitten angeordnete Zelt geöffnet und ist in der Konfiguration der Fig. 3c bereits vollständig aufgeklappt. Durch die Verriegelung 20 wird gleichzeitig das Zelt in der aufgeschlagenen Position arretiert und ein unbeabsichtigtes Einklappen verhindert.

Wie in Fig. 3c und 3d dargestellt liegt der erste Bodenabschnitt 11 nun höher als das Wiederlager 34 und ein oder mehrere Beine 24 können an dem Bodenabschnitt 11 angebracht werden, wie in Fig. 3d dargestellt. Die Länge der Beine kann so gewählt sein oder eingestellt werden, dass die Beine in dieser Position bereits auf dem Boden stehen.

An dem zweiten Bodenabschnitt 12 können ebenfalls Beine 24 moniert werden. Sind diese beweglich an dem Bodenabschnitt 12 befestigt, können dies auch schon angebracht werden, wenn der zweite Bodenabschnitt 12 noch in der Aufnahme liegt. Dann können Beine genutzt werden um mit einer Drehbewegung mit der Aufnahme 32 als Auflager den zweiten Bodenabschnitt 12 nach oben zu hebeln und die Plattform auch auf diese Seiten auf den Beinen 24 abzustellen. Die Plattform steht dann im Wesentlichen eben, wie in Fig 3 e dargestellt. Die Plattform ist durch den Aufstellprozess derart erhöht worden, dass das Fahrzeug, auf dem die Plattform transportiert wurde, nun frei unter der Plattform herausgefahren werden kann. Unebenheiten des Untergrunds, auf dem die Beine stehen, können ggf. über eine Längenverstellung der Beine 24 ausgeglichen werden. Dazu können eines, mehrere oder alle Beine 24 über eine Längenverstellung, beispielsweise einen Teleskopmechanismus, Verstellschrauben zur Höheneinstellung oder anderes umfassen. Mit einer Höheneinstellung ist es auch möglich, die Plattform an unterschiedliche Fahrzeuge oder Trägerhöhen anzupassen.

Abschließend können Abspannungen zwischen den Beinen und/oder zwischen den Beinen 24 und den Bodenabschnitten angeordnet werden, um die Konstruktion selbststehend zu stabilisieren und zu versteifen. Die Abspannungen sind beispielhaft in Fig. 1 gezeigt. Die Abspannungen können ausschließlich zwischen den Elementen der Plattform erfolgen, wodurch die Plattform selbsttragend werden kann. Abspannungen am Boden oder anderen Gegenständen wir Ankern oder Häringen sind nicht erforderlich, können jedoch, wenn gewünscht, zur zusätzlichen Absicherung verwendet werden.

Alternativ oder als Ergänzung können Zeltwände zwischen den Beinen angebracht werden um den unter der Plattform liegenden Raum von einer oder mehreren Seiten zu schützen. Es kann mit den Zeltwänden auch ein geschlossener Raum unterhalb der Bodenplatte geschaffen werden.

Sobald die Plattform selbst auf ihren Beinen 24 steht, kann der Träger 30 samt dem Fahrzeug, auf dem er sich befindet entfernt werden und das Fahrzeug steht samt Dachträger unabhängig von dem Dachzelt zur Verfügung.

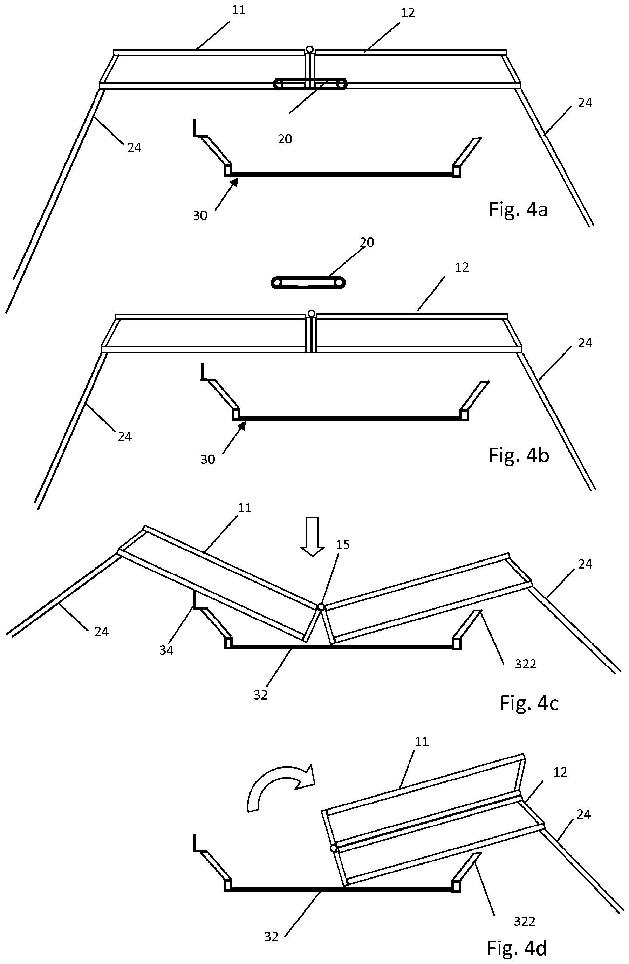

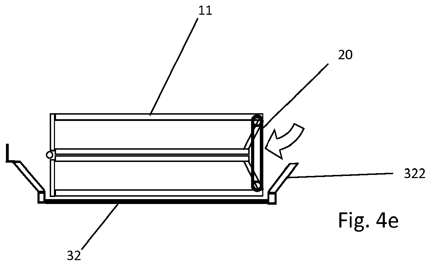

Figur 4 zeigt schematisch den Abbau der Plattform. Der Träger 30 wird zunächst samt Fahrzeug unter der Bodenplatte der Plattform grob positioniert, wie in Fig. 4a dargestellt. Dabei ist es vorteilhafterweise nicht erforderlich, den Träger 30 in eine bestimmte Position zu bringen. Vielmehr reicht es aus, wenn die Aufnahme 32 unter das Scharnier 15 gebracht wird. Wie im Nachfolgenden gezeigt, können sich die Bodenabschnitte 11 und 12 selbst in der Aufnahme ausrichten.

Ist der Träger 30 in einer richtigen Position, kann die Verriegelung 20 entfernt oder entspannt werden, wie in Figur 4b gezeigt. Die Bodenplatte verliert dadurch ihre Versteifung und wir über das Scharnier 15 in der Mitte absinken, wie Fig. 4c gezeigt. Das Absinken kann durch ein Dämpfungselement in oder an dem Scharnier 15 oder zwischen dem ersten Bodenabschnitt 11 und dem zweiten Bodenabschnitt 12 gebremst werden. Ist die Versteifung durch eine Seil oder einen Gurt erzeugt worden, kann das Absinken über das Entspannen dieser Vorrichtung erfolgen. Der erste Bodenabschnitt 11 und oder der zweite Bodenabschnitt 12 treffen dann auf die Aufnahme 32, wie in Fig. 4c dargestellt. Je nach Position des Träger 30 zu der Plattform kann der ersten Bodenabschnitt 11 auch auf dem Widerlager 34 und/oder der zweite Bodenabschnitt 12 auf der Führung 322 aufliegen.

Bereits vorab oder auch erst jetzt können ggf. noch die Abspannungen 26 und die Seitenwände 48 abgenommen werden.

Der erste Bodenabschnitt 11 kann nun auf den zweiten Bodenabschnitt 12 geklappt werden, wie in Fig. 4d dargestellt. Zum Klappen können die Beine 24 genutzt werden oder die Beine 24 werden vor dem Klappen von dem ersten Bodenabschnitt 11 entfernt. An dem zweiten Bodenabschnitt 12 können die Beine 24 noch verbleiben und die zweite Bodenplatte 12 am Boden statt an der Führung 322 abstützen.

Ist ein Zelt vorhanden, wird dies beim Zusammenklappen ebenfalls eingefaltet und das Zeltgestänge und Zeltdach kann zwischen dem ersten Bodenabschnitt 11 und dem zweiten Bodenabschnitt 12 verstaut werden, ähnlich wie bei einem gewöhnlichen Dachzelt.

Die Beine könne nun auch von dem zweiten Bodenabschnitt 12 entfernt oder abgeklappt werden und der zweite Bodenabschnitt 12 kann mit dem angeklappten ersten Bodenabschnitt 11 zusammen in die Aufnahme 32 geschoben werden. Um das Postioniern in der Aufnahme zu erleichtern könne die Führungen 322 eine schräge Form aufweisen, so dass die Bodenabschnitte in die vorgesehene Position in der Aufnahme 32 gleiten, wie in Fig. 4e gezeigt.

Die Verriegelung 20 kann genutzt werden, um den ersten Bodenabschnitt 11 an dem zweiten Bodenabschnitt 12 und/oder an dem Träger 30 zu arretieren. Daneben können auch andere Befestigungen (nicht gezeigt) vorgesehen sein, um die Bodenabschnitte an dem Träger 30 transportsicher zu fixieren.

## Patentansprüche

1. Plattform (2) zur Anordnung an einem Fahrzeug, wobei die Plattform umfasst:
- Eine Bodenplatte, welche einen ersten Bodenabschnitt (11) und einen zweiten Bodenabschnitt (12) umfasst, wobei in einem Transportzustand der erste Bodenabschnitt (11) und der zweite Bodenabschnitt (12) übereinander angeordnet sind und in einem aufgebauten Zustand starr miteinander verbunden sind und eine Bodenplatte der Plattform bilden; wobei die Plattform zudem umfasst:
- einen Träger (30) zur Anordnung an dem Fahrzeug, wobei der Träger (30) eine Aufnahme (32) umfasst, welche dazu ausgelegt ist den ersten Bodenabschnitt (11) und den zweiten Bodenabschnitt (12) in dem Transportzustand aufzunehmen, wobei die Aufnahme (32) zumindest ein Widerlager (34) aufweist und der erste Bodenabschnitt (11) und der zweite Bodenabschnitt (12) bezüglich der Aufnahme (32) und dem Widerlager (34) beweglich sind; **dadurch gekennzeichnet, dass**
- die Plattform in dem aufgebauten Zustand gegenüber dem Transportzustand angehoben und freistehend ist.

2. Plattform nach Anspruch 1, zudem umfassend:
- eine Verriegelung (20), welche den ersten Bodenabschnitt (11) und den zweiten Bodenabschnitt (12) in einem verriegelten Zustand starr miteinander verbindet und wobei in einem entriegeltem Zustand der erste Bodenabschnitt (11) bezüglich des zweiten Bodenabschnitt (12) beweglich ist.

3. Plattform nach einem der vorangehenden Ansprüche, wobei das Widerlager (34) erhöht, oberhalb der Aufnahme (32) angeordnet ist.

4. Plattform nach Anspruch 3, wobei das Widerlager dazu ausgelegt ist, dass der erste Bodenabschnitt (11) und der zweite Bodenabschnitt (12) über das erhöhte Widerlager (34) angehoben und von dem Träger (30) abgehoben werden können.

5. Plattform nach einem der der vorangehenden Ansprüche, zudem umfassend eine Vielzahl von Beinen, wobei die Plattform dazu ausgelegt ist in aufgebautem Zustand von den Beinen getragen zu werden.

6. Plattform nach Anspruch 5, zudem umfassend einen oder mehrere Abspannungen, welche an zumindest einem der Beine (24) angeordnet ist.

7. Plattform nach einem der vorangehenden Ansprüche, zudem umfassend eine Zelt, welches zwischen dem ersten Bodenabschnitt (11) und dem zweiten Bodenabschnitt (12) angeordnet ist und wobei der erste Bodenabschnitt (11) und der zweite Bodenabschnitt (12) die Bodenplatte des Zeltes ist.

8. Verfahren zum Aufbau einer auf einem Träger gelagerten Plattform, umfassend:
- Entfalten eines ersten Bodenabschnitts (11) bezüglich eines zweiten Bodenabschnitts (12), welche in einer Aufnahme (32) des Trägers (30) gelagert sind,
- Arretieren des ersten Bodenabschnitts (11) mit dem zweiten Bodenabschnitt (12) zu einer verriegelten Bodenplatte, **dadurch gekennzeichnet, dass** die verriegelte Bodenplatte auf einem bezüglich der Aufnahme erhöhten Widerlager (34) des Trägers (30) aufliegt und das Verfahren umfasst
- Anheben der verriegelten Bodenplatte über das erhöhte Widerlager (34);
- Abstützen der verriegelten Bodenplatte auf Beinen.

9. Verfahren nach Anspruch 8, zudem umfassend ein Abspannen der Plattform mittels einer Vielzahl von Abspannvorrichtungen.

10. Verfahren nach Anspruch 8 oder 9, zudem umfassend ein Anordnen von einem oder mehreren Beinen (24) an zumindest einer der Bodenabschnitte (11, 12).

11. Verfahren nach einem der Ansprüche 8 bis 10, zudem umfassend ein Entfernen des Trägers (30) unter der Plattform.

12. Verfahren nach einem der Ansprüche 8 bis 11, wobei die Plattform ein Zelt (40) aufweist und zwischen dem ersten Bodenabschnitt (11) und dem zweiten Bodenabschnitt (12) eine Zeltkonstruktion angeordnet ist.

13. Verfahren zum Abbau einer selbststehenden Plattform, umfassend:
- Positionieren eines Trägers (30) mit einer Aufnahme (32) unter einer aus einem ersten Bodenabschnitt (11) und einem zweiten Bodenabschnitt (12) gebildeten verriegelten Bodenplatte der Plattform;
- Entriegeln der verriegelten Bodenplatte, so dass der erste Bodenabschnitt (11) bezüglich des zweiten Bodenabschnitts (12) verschwenkt und zumindest eines des ersten Bodenabschnitts und des zweiten Bodenabschnitts auf der Aufnahme (32) aufliegt;
- Zusammenklappen des ersten Bodenabschnitts (11) auf den zweiten Bodenabschnitt (12), **gekennzeichnet durch**
verschieben der zusammen geklappten Bodenabschnitte auf dem Träger (30) bis die zusammen geklappten Bodenabschnitte in der Aufnahme (32) aufgenommen sind.

14. Verfahren nach Anspruch 13, wobei das Positionieren des Trägers (30) mittels eines Fahrzeugs erfolgt, an welchem der Träger (30) angeordnet ist.

## Claims

1. A platform (2) for arrangement at a vehicle, wherein the platform comprises:
- a base plate, which comprises a first base portion (11) and a second base portion (12), wherein, in a transport state, the first base portion (11) and the second base portion (12) are arranged one over the other, and, in an assembled state, are rigidly connected to one another and form a base plate of the platform;
wherein the platform additionally comprises:
- a support (30) for arrangement at the vehicle, wherein the support (30) comprises receiving means (32) which are configured to receive the first base portion (11) and the second base portion (12) in the transport state, wherein the receiving means (32) comprise at least one abutment (34), and the first base portion (11) and the second base portion (12) can be moved relative to the receiving area (32) and the abutment (34);
**characterized in that**
- the platform is, in the assembled state, raised with respect to the transport state, and is freestanding.

2. The platform according to claim 1, additionally comprising:
- a locking (20) which connects the first base portion (11) and the second base portion (12) rigidly to one another in a locked state, and wherein, in an unlocked state, the first base portion (11) is movable relative to the second base portion (12).

3. The platform according to any one of the preceding claims, wherein the abutment (34) is in an elevated position above the receiving area (32).

4. The platform according to claim 3, wherein the abutment is configured such that the first base portion (11) and the second base portion (12) can be raised over the elevated abutment (34) and taken off from the support (30).

5. The platform according to any one of the preceding claims, additionally comprising a plurality of legs, wherein the platform, in the assembled state, is configured to be carried by the legs.

6. The platform according to claim 5, additionally comprising one or more bracings, which is arranged on at least one of the legs (24).

7. The platform according to any one of the preceding claims, additionally comprising a tent which is arranged at the first base portion (11) and the second base portion (12), and wherein the first base portion (11) and the second base portion (12) are the base plate of the tent.

8. A method for assembly of a platform, that is positioned on a support, the method comprising:
- unfolding a first base portion (11) with respect to a second base portion (12), which are arranged in receiving means (32) of the support (30),
- locking the first base portion (11) with the second base portion (12) to form a locked base plate,
**characterized in that** the locked base plate rests on an elevated abutment (34) of the support (30) in relation to the receiving area, and the method comprises:
- raising the locked plate over the elevated abutment (34);
- supporting the locked base on legs.

9. The method according to claim 8, additionally comprising a bracing of the platform by of a plurality of bracings.

10. The method according to claim 8 or 9, additionally comprising an arranging of one or more legs (24) on at least one of the base portions (11, 12).

11. The method according to any one of claims 8 to 10, additionally comprising a removing of the support (30) underneath the platform.

12. The method according to any one of claims 8 to 11, wherein the platform comprises a tent (40), and a tent structure is arranged between the first base portion (11) and the second base portion (12).

13. A method for dismantling a self-standing platform, comprising:
- positioning a support (30) comprising receiving means (32) underneath a locked base plate of the platform, formed from a first base portion (11) and a second base portion (12);
- unlocking the locked base plate, so that the first base portion (11) is pivoted with respect to the second base portion (12) and at least one of the first base portion and of the second base portion comes to rest on the receiving means (32);
- folding the first base portion (11) onto the second base portion (12),
**characterized by**
moving the folded base portions on the support (30) until the folded base portions are received in the receiving means (32).

14. The method according to claim 13, wherein the positioning of the support (30) is by means of a vehicle on which the support (30) is arranged.

## Revendications

1. Plateforme (2) destinée à être agencée à un véhicule, dans laquelle la plateforme comporte :
- une plaque de fond comportant une première partie de fond (11) et une deuxième partie de fond (12), dans laquelle, dans un état de transport, la première partie de fond (11) et la deuxième partie de fond (12) sont superposées et, dans un état monté, sont reliées fixement l'une à l'autre et forment une plaque de fond de la plateforme ;
dans laquelle la plateforme comporte en outre :
- un support (30) destiné à être agencé au véhicule, dans lequel le support (30) comporte un logement (32) conçu pour recevoir la première partie de fond (11) et la deuxième partie de fond (12) dans l'état de transport, dans laquelle le logement (32) présente au moins une culée (34) et la première partie de fond (11) et la deuxième partie de fond (12) sont déplaçables par rapport au logement (32) et à la culée (34) ; **caractérisée en ce que**;
- la plateforme est relevée et autoportante dans l'état monté par rapport à l'état de transport.

2. Plateforme selon la revendication 1, comportant en outre :
- un dispositif de verrouillage (20) reliant la première partie de fond (11) et la deuxième partie de fond (12) fixement l'une à l'autre dans un état verrouillé et dans laquelle la première partie de fond (11) est déplaçable par rapport à la deuxième partie de fond (12) dans un état déverrouillé.

3. Plateforme selon l'une des revendications précédentes, dans laquelle la culée (34) est disposée de façon surélevée au-dessus du logement (32).

4. Plateforme selon la revendication 3, dans laquelle la culée est conçue de manière à ce que la première partie de fond (11) et la deuxième partie de fond (12) puissent être relevées au-dessus de la culée (34) surélevée et retirées du support (30).

5. Plateforme selon l'une des revendications précédentes, comportant en outre une pluralité de pieds, la plateforme étant conçue pour être portée par les pieds dans l'état monté.

6. Plateforme selon la revendication 5, comportant en outre un ou plusieurs haubans, lesquels sont disposés sur l'une au moins des pieds (24).

7. Plateforme selon l'une des revendications précédentes, comportant en outre une tente, laquelle est disposée entre la première partie de fond (11) et la deuxième partie de fond (12) et dans laquelle la première partie de fond (11) et la deuxième partie de fond (12) constituent la plaque de fond de la tente.

8. Procédé de montage d'une plateforme montée sur un support, comportant :
- le dépliage d'une première partie de fond (11) par rapport à une deuxième partie de fond (12), lesquelles sont reposées dans un logement (32) du support (30),
- le blocage de la première partie de fond (11) avec la deuxième partie de fond (12) de manière à obtenir une plaque de fond verrouillée, **caractérisé en ce que** la plaque de fond verrouillée repose sur une culée (34) du support (30) surélevé par rapport au logement et le procédé comporte
- le relèvement de la plaque de fond verrouillée au-dessus de la culée (34) surélevée ;
- l'appui de la plaque de fond verrouillée sur des pieds.

9. Procédé selon la revendication 8, comportant en outre un hauban de la plateforme au moyen d'une pluralité de dispositifs d'haubanage.

10. Procédé selon la revendication 8 ou 9, comportant en outre un agencement d'une ou de plusieurs pieds (24) sur l'une au moins des parties de fond (11, 12).

11. Procédé selon l'une des revendications 8 à 10, comportant en outre un retrait du support (30) sous la plateforme.

12. Procédé selon l'une des revendications 8 à 11, dans lequel la plateforme présente une tente (40) et une structure de tente est disposée entre la première partie de fond (11) et la deuxième partie de fond (12).

13. Procédé de démontage d'une plateforme autoportante, comportant :
- le positionnement d'un support (30) avec un logement (32) sous une plaque de fond verrouillée de la plateforme constituée par une première partie de fond (11) et une deuxième partie de fond (12) ;
- déverrouillage de la plaque de fond verrouillée, de telle façon que la première partie de fond (11) pivote par rapport à la deuxième partie de fond (12) et que l'une au moins parmi la première partie de fond et la deuxième partie de fond repose sur le logement (32) ;
- rabattement de la première partie de fond (11) sur la deuxième partie de fond (12),
**caractérisé par** le déplacement des parties de fond rabattues sur le support (30) jusqu'à l'admission des parties de fond rabattues dans le logement (32).

14. Procédé selon la revendication 13, dans lequel le positionnement du support (30) est effectué au moyen d'un véhicule, sur lequel est disposé le support (30).
